(19) Europäisches Patentamt
European Patent Office
Office européen des brevets

(11) EP 1 626 400 A1

(12) **EUROPEAN PATENT APPLICATION**
published in accordance with Art. 158(3) EPC

(43) Date of publication:
**15.02.2006 Bulletin 2006/07**

(21) Application number: **04734085.6**

(22) Date of filing: **20.05.2004**

(51) Int Cl.:
*G11B 7/24 (1968.09)*

(86) International application number:
**PCT/JP2004/006830**

(87) International publication number:
**WO 2004/105009 (02.12.2004 Gazette 2004/49)**

(84) Designated Contracting States:
**DE ES FR GB IT NL**

(30) Priority: **22.05.2003 JP 2003145458**
**30.06.2003 JP 2003188985**

(71) Applicant: **Ricoh Company, Ltd.**
**Tokyo 143-8555 (JP)**

(72) Inventors:
- **YASHIRO, Tohru;**
**kita, Ebina-shi, Kanagawa; 2430406 (JP)**
- **MIKAMI, Tatsuo;**
**un, Kanagawa;2580021 (JP)**
- **NAKAMURA, Yuki**
**1950053 (JP)**

(74) Representative: **Barz, Peter**
**Patentanwalt**
**Kaiserplatz 2**
**80803 München (DE)**

(54) **OPTICAL RECORDING MEDIUM**

(57) The object of the present invention is to provide a single-sided double-layer recording/reproducing optical recording medium, wherein favorable recording signal properties may be obtained even from the second recording layer.

An optical recording layer comprises, layered in the order from the recording/reproducing light incident plane, a first substrate, a first recording layer comprising an organic dye as a main component, a first reflective layer, a bonding layer, an inorganic protective layer, a second recording layer comprising an organic dye as a main component, a second reflective layer and a second substrate and permits recording/reproducing by a red laser beam, wherein the optical recording medium is **characterized by** the depth of guide grooves formed in the second substrate which is in any one of the ranges from 200 Å to 600 Å and from 1,900 Å to 2,700 Å.

FIG. 3

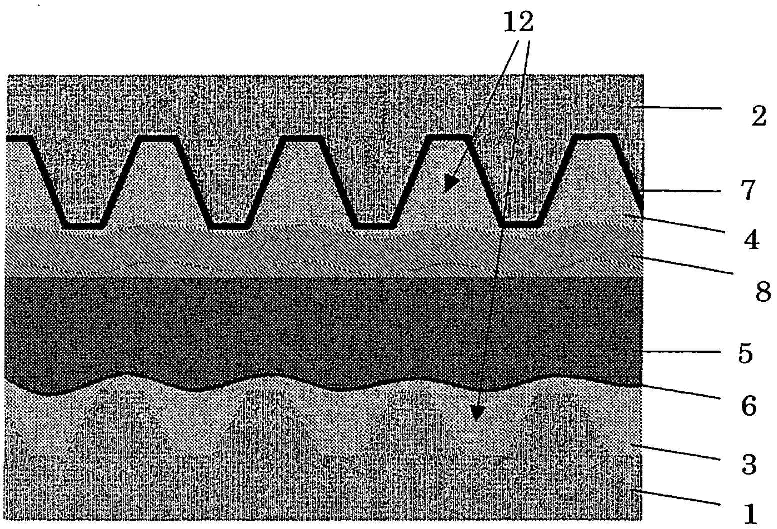




Printed by Jouve, 75001 PARIS (FR)

## Description

Technical Field

The present invention relates to a single-sided double-layer recording/reproducing optical recording medium.

Background Art

In addition to an optical recording medium such as a reproduction-only Digital Versatile Disc (DVD), recordable DVDs (e.g. DVD+RW, DVD+R, DVD-R, DVD-RW and DVD-RAM) have been put to practical use. The DVD+R and DVD+RW lie at the extension of the conventional technologies for recordable compact discs (CD-R and CD-RW), and to maintain the reproduction compatibility of the DVD+R and DVD+RW with the reproduction-only DVD, the DVD+R and DVD+RW are designed so that the recording density (e.g. track pitch and signal mark length) and the substrate thickness are compatible with those of CDs. For example, a DVD+R adopts a configuration, just as a CD-R, wherein an optical recording layer is formed by spin-coating a dye on a substrate, and the information recording substrate behind which a metallic reflective layer is formed is laminated with another substrate of the same configuration as the first substrate through an adhesive. In this case, the optical recording layer usually comprises a dye material. One of the characteristics of the CD-R is to have a high reflectivity (65 %) satisfying CD standards. This is because it is necessary that the optical recording layer satisfies a given complex refractive index at a recording/reproducing light wavelength, and the light absorption characteristic of the dye is appropriate to obtain a high reflectivity with the above-noted configuration. These are the properties that are to be satisfied as well for DVDs.

Incidentally, a reproduction-only DVD having two recording layers has been proposed to increase the recording capacity of the existing reproduction-only DVD. FIG. 1 is a cross-sectional view schematically showing a layer composition of a DVD having two recording layers. A first substrate 1 and a second substrate 2 are laminated with each other through a transparent intermediate layer 5 comprising a UV-cure resin. On the inner surface of the first substrate 1, a first recoding layer 3 is formed, and on the inner surface of the second substrate 2, a second recoding layer 4 is formed. The first recoding layer 103 is formed as a translucent film of a dielectric film. The second recoding layer is formed as a reflective film of a metal film. On the first recoding layer, convexo-concave recording marks are formed, and by the effect of reflection and interference of a reproduction laser, recording signals are read. Since signals are read in the two recording layers, the DVD may obtain a memory capacity of up to 8.5 GB. Each of the first and the second substrates has a thickness of approximately 0.6 mm, and the intermediate layer has a thickness of approximately 50 $\mu$m. The translucent film as the first recording layer is formed such that its reflectivity is around 30 %; a laser beam applied to reproduce the second recording layer is attenuated in the first recording layer by about 30 % of the whole laser intensity due to reflection. Thereafter, the attenuated laser is reflected by the reflective film of the second recording layer, and after the laser beam is attenuated once again at the first recording layer, the laser beam emerges from the disc. By focusing the laser beam as a reproducing light on the first recording layer or the second recording layer and detecting the reflected light, signals of each of the recording layers may be reproduced. Meanwhile, regarding a DVD, a laser beam used for recording/reproducing has a wavelength of about 650 nm.

However, there only exist recordable DVD, DVD+R, DVD-R and DVD+RW with one recording layer readable from one surface. In order to increase the memory capacity of these optical recording media, it is necessary that the information is reproduced from the both surfaces for the following reason. A single-sided double-layer optical recording medium for recording/reproducing comprises two recording layers, and when a signal is being recorded by applying a laser beam that is brought from an optical pickup to focus on the inner recording layer, the light absorption and light reflection required for recording on the second layer are incompatible due to the attenuation of the laser beam in the first recording layer.

Patent Literature 1 discloses an invention that aims, in recording, to write from the two recording layers from one surface of the optical recording medium to the two recording layers that comprise an organic dye, and in reproducing, to read out from one surface of the optical recording medium as well. However, this literature only proposes a configuration where two existing types of substrates, one configured such that a light enters from the surface of the substrate for recording and the other configured such that a light enters from the surface of the recording layer, are laminated. Also, this patent literature does not disclose data for recording/reproducing on the two recording layers. According to the examinations by the inventor of the present invention, et al., a practical recording/reproducing is not possible with this configuration, and the above-noted problem regarding the absorption and reflection of light in the second recording layer remains unsolved.

Further, Patent Literature 2 discloses a multi-layer optical recording medium, wherein recording layers comprise an organic dye. However, for the construction of the grooves on the second and the subsequent layers, a so-called 2-P method is employed, wherein the grooves are copied by radiation-cure resin, and actual production is difficult. Patent Literature 3 describes a double-layer optical recording medium as Example 2. However, the recording layer is made of

an alloy, and the structure comprises a supplementary recording layer comprising a cyanine dye. The fundamental structure is different from that of the present invention; furthermore, the literature does not mention or indicate the effect of the depth of the guide grooves in the substrates to the properties of the medium.

Patent Literature 1 Japanese Patent Application Laid-Open (JP-A) No. 11-66622
Patent Literature 2 JP-A No. 8-124210
Patent Literature 3 JP-A No. 2001-184720

Disclosure of Invention

The object of the present invention is to provide a single-sided double-layer recording/reproducing optical recording medium, wherein the above-noted problems are resolved and favorable recording signal properties may be obtained even from the second recording layer.
Means of solving the problems are as follows:

<1> An optical recording medium, comprising, layered in the order from the recording/reproducing light incident plane as mentioned below, a first substrate, a first recording layer comprising an organic dye as a main component, a first reflective layer, a bonding layer, an inorganic protective layer, a second recording layer comprising an organic dye as a main component, a second reflective layer and a second substrate, and permitting recording/reproducing by a red laser beam, wherein the optical recording medium is characterized by the depth of guide grooves formed in the second substrate which is any one of the ranges from 200 Å to 600 Å and from 1,900 Å to 2,700 Å.
<2> The optical recording medium according to <1>, wherein the depth of the guide grooves on the second substrate is 200 Å to 600 Å, the maximum absorption wavelength of the light absorption spectrum in the second recording layer is 580 nm to 620 nm, and Absorption at the maximum absorption wavelength is 1.5 to 2.0.
<3> The optical recording medium according to <2>, wherein the depth of the guide grooves in the second substrate is 200 Å to 400 Å.
<4> The optical recording medium according to <2>, wherein the film thickness of the second recording layer is at least 1.5 times as large as that of the first recording layer.
<5> The optical recording medium according to <4>, wherein the film thickness of the second recording layer is 1.5 to 2.5 times as large as that of the first recording layer.
<6> The optical recording medium according to <2>, wherein the film thickness of the second reflective layer is at least five times as large as that of the first reflective layer.
<7> The optical recording medium according to <2>, wherein the thermal conductivity of the second reflective layer is higher than that of the first reflective layer.
<8> The optical recording medium according to <2>, wherein a recording mark, which is formed in the first recording layer on the first substrate, is formed at the groove portion created by the asperity of the guide grooves, and a recording mark, which is formed in the second recording layer on the second substrate, is formed at the land portion created by the asperity of the guide grooves.
<9> The optical recording medium according to <1>, wherein the depth of the guide grooves formed on the second substrate is 1,900 Å to 2,700 Å, and the depth of the guide grooves formed on the first substrate is 1,300 Å to 1,700 Å.
<10> The optical recording medium according to <9>, wherein, at the maximum absorption wavelength $\lambda max$, Absorption in the first recording layer is 0.5 to 0.8, and Absorption in the second recording layer is 0.8 to 1.4.
<11> The optical recording medium according to <9>, wherein, regarding any of the thick portion and the thin portion of the recording layer created by the asperity of the guide grooves, the recording/reproducing is possible at the thick portion in any one of the first recording layer formed on the first substrate and the second recording layer formed on the second substrate,
<12> The optical recording medium according to <9>, wherein the refractive index of the inorganic protective layer at a recording/reproducing wavelength is 1.0 to 2.4.
<13> The optical recording medium according to <9>, wherein the transmissivity of the first reflective layer to an incident recording/reproducing light is 40 % to 80 %.
<14> The optical recording medium according to <9>, wherein the material for the reflective layer is a silver alloy.
<15> An optical recording method of an optical recording medium, wherein, the optical recording medium, comprising, layered in the order from the recording/reproducing light incident plane as mentioned below, a first substrate, a first recording layer comprising an organic dye as a main component, a first reflective layer, a bonding layer, an inorganic protective layer, a second recording layer comprising an organic dye as a main component, a second reflective layer and a second substrate, and permitting recording/reproducing by a red laser beam, is characterized by the depth of guide grooves formed in the second substrate which is any one of the ranges from 200 Å to 600 Å and

from 1,900 Å to 2,700 Å, and a recording/reproducing is performed in the first recording layer and the second recording layer of the optical recording medium by applying a red laser beam on the first substrate according to any one of the DVD+RW, DVD+R, DVD-R, DVD-RW and DVD RAM recording/reproducing methods.

<16> An optical recording apparatus, comprising a rotating driving mechanism that rotates an optical recording medium, a laser oscillator that emits a laser beam, a lens that collects the laser beam emitted from the laser oscillator and focuses it to the recording surface of the optical information recording medium and an optical pickup comprising a photo-detector detecting the light reflected by the optical information recording medium and permitting recording/reproducing by applying a red laser beam on the first substrate according to any one of the DVD+RW, DVD+R, DVD-R, DVD-RW and DVD RAM recording/reproducing methods,

wherein the optical recording medium, comprising, layered in the order from the recording/reproducing light incident plane as mentioned below, a first substrate, a first recording layer comprising an organic dye as a main component, a first reflective layer, a bonding layer, an inorganic protective layer, a second recording layer comprising an organic dye as a main component, a second reflective layer and a second substrate, and permitting recording/reproducing by a red laser beam, has guide grooves formed in the second substrate with the depth of any one of the ranges from 200 Å to 600 Å and from 1,900 Å to 2,700 Å, and

the optical recording apparatus is characterized by its accessing the first recording layer and the second recording layer from an identical surface of the optical recording medium.

## Brief Description of Drawings

FIG. 1 is a sectional view schematically showing the structure of a reproduction-only DVD comprising two recording layers.

FIG. 2 is a view schematically showing a structural example of an optical recording medium according to the present invention.

FIG. 3 is a view schematically showing an example of the layer composition of a double-layer optical recording medium according to the present invention.

FIG. 4 shows a relation between the groove depth in the second substrate and the reflectivity of the second reflective layer of a double-layer optical recording medium according to the present invention.

FIG. 5 is a view explaining the groove depth in a double-layer optical recording medium according to the present invention.

FIG. 6 is a view schematically showing the layer composition of a first substrate with a guide groove formed.

FIG. 7 is a view schematically showing the layer composition of a second substrate with a guide groove formed.

FIG. 8 shows a relation between the groove depth in the first substrate and the reflectivity of the first reflective layer of a double-layer optical recording medium according to the present invention.

FIG. 9 shows a relation between the groove depth in the first substrate and the jitter in the first recording layer of a double-layer optical recording medium according to the present invention.

FIG. 10 shows the light absorption spectrum of a dye recording layer.

FIG. 11 shows the light absorption spectrum of the recording layer according to Example A-1.

FIG. 12 shows the light absorption spectrum of the recording layer according to Example A-2.

FIG. 13 shows the modulation of the second recording layer according to Example A-3.

## Best Mode for Carrying Out the Invention

The present invention relates to a double-layer optical recording medium comprising two recording layers which permits recording/reproducing with a red laser beam, particularly a laser beam of 640 nm to 665 nm. The optical recording medium of the present invention comprises, as shown in FIG. 2 and layered in the order mentioned from a recording/reproducing light incident surface side, a first substrate 1, a first recording layer 3 comprising an organic dye as a main component, a first reflective layer 6, a bonding layer (a transparent intermediate layer) 5, an inorganic protective layer 8, a second recording layer 4 comprising an organic dye as a main component, a second reflective layer 7 and a second substrate. For convenience of explanation, a composition comprising the first substrate 1, the first recording layer 3 and the first reflective layer 6 is occasionally mentioned as a first information substrate 21, and a composition comprising the second substrate 2, the second recording layer 4, the second reflective layer 7 and the inorganic protective layer 8 as a second information substrate 22. Also, an arrow L in the figure denotes a recording/reproducing laser beam.

In addition, other than the layers illustrated in the figure, layers such as an undercoat layer, a sulfuration resistant layer for Ag reflective layer, a smoothing layer and an oxidation resistant layer may be provided if necessary.

The shape of the interface between the second recording layer and the second reflective layer depends on the

shape of the guide grooves in the second substrate because the second reflective layer is formed directly on the second substrate (FIG. 3, wherein the reference numbers in the figure refer to the same reference numbers in FIG. 2). The diffraction by the interface between the second recording layer and the second reflective layer, which reflects the shape of the guide grooves in the second substrate, is maximized with the optical path difference of $\lambda/2$ because the phase difference is n. Regarding the reflectivity, the above condition is met when the groove depth of generally $(2m-1)\lambda/(4n)$ is satisfied, where $\lambda$ is the wavelength of a recording/reproducing light, n is the refractive index of a substrate material, and m is an integer of one or greater. The diffraction is maximized, and hence the intensity of the reflected light is minimized.

The depth of guide grooves of the traditional single-layer DVD is around 1,500 Å to 1,600 Å. On the other hand, regarding an optical recording medium shown in FIG. 3 comprising a layer composition that employs a substrate with the thickness of 0.6 mm, equivalent to DVD+R standards, an examination of the relation between the groove depth and the reflectivity by means of an optical system with an NA of 0.65 and a wavelength of 655 nm reveals results shown in FIG. 4. The phase depends on the LD wavelength, yet as long as the LD wavelength is within the range of 640 nm and 655 nm, which is usually used for example for DVDs, it is right in considering almost the same tendency as in FIG. 4 is observed regardless of the wavelength. Further, the relation shown in FIG. 4 is due to the light diffraction phenomenon; the change in the constituting material and the thickness may affect the amplitude, but the relation between the groove depth and the phase remains unchanged.

For a double-layer optical recording medium, it is important to control the reflectivity. To that end, it is necessary to choose a groove depth that provides a high reflectivity.

The required reflectivity of 18 % or greater may be accomplished, for the ranges shown in FIG. 4, when the groove depth is 400 Å or less or in the range of 1,900 Å and 2,700 Å. In addition, when the material and the thickness of a dye layer are adjusted for high reflectivity, the required reflectivity of 18 % or greater may be achieved with the depth of 600 Å or less. Here, the depth of a groove is the length from the upper aperture to the base of the groove at the center of the cross-section of the groove, indicated by arrows in FIG. 5. In FIG. 5, a denotes the groove depth in the first substrate, and b the groove depth of the second substrate.

In the optical recording medium in FIG. 3, in order for the second recording layer comprising an organic dye as a main component to achieve a sufficient modulation of 60 % or greater in recording signals, Absorption of the dye at the maximum absorption wavelength $\lambda$max is preferably 0.8 or greater.

The absorbance of the dye at the maximum absorption wavelength $\lambda$max exceeding 1.4 is not preferable because the jitter deteriorates due to heat accumulation in recording.

Absorption is proportional to the film thickness. To keep Absorption within the above-noted range, the film thickness of the dye layer may be controlled according to the type of the dye.

Next, the optical recording medium as a preferable aspect of the present invention is described in detail, wherein, for the optical recording medium, the depth of the guide grooves in the second substrate is 200 Å to 600 Å, the maximum absorption wavelength in the light absorption spectrum of the second recording layer is 580 nm to 620 nm, and Absorption is 1.5 to 2.0.

The characteristic of the present invention is that single-sided double-layer recording/reproducing is made possible by the following: a recording medium is selected such that the maximum absorption wavelength of the light absorption spectrum lies with in the range of 580 nm and 620 nm so that recording/reproducing is possible at a laser wavelength of DVD of approximately 650 nm; the film thickness of the second recording layer is controlled such that Absorption at the maximum absorption wavelength is 1.5 to 2.0; the second recording layer is disposed between deformation resistant layers (a second reflective layer and an inorganic protective layer) so that the shape of the recording marks are arranged. A favorable modulation may not be obtained with Absorption of less than 1.5, and Absorption of greater than 2.0 results in poor jitter.

According to the present invention, by configuring the first information substrate comprising a first recording layer in the same manner as the conventional single-layer recording-layer medium (e.g. DVD+R), wherein the first recording layer formed on the first substrate and the first reflective layer are laminated to the second substrate, the effect of multi-diffraction at the both interfaces of the first recording layer and the deformation of the substrate in mark formation may be obtained, and consequently, the reflectivity and the modulation of the recording signal (contrast) may be obtained

In addition, regarding the second information substrate comprising a second recording layer, the reflectivity and the modulation of recording signal (contrast) may be achieved due to the groove shape in the substrate and the light absorption characteristic of the second recording layer. At the same time, the shape of the recording marks is arranged by the second recording layer disposed between the deformation resistant inorganic layers (the second reflective layers and the inorganic protective layer).

In order to achieve the above-noted effects, the film thickness of the second recording layer is 1.5 to 2.5 times as large as that of the first recording layer. If the difference between the film thicknesses of the recording layers is beyond this range, it is not easy to record in two recording layers with the same recording strategy (the light emission pulse patter of a recording laser) due to the difference in spread property between recording marks.

The commonly used method for depositing a recording layer is to spin coat a dye dissolved in the coating

solvent. When a film is deposited on a substrate on which guide grooves have already been formed, the difference in the film thickness between the grooves and the lands within the dye film occurs. The thickness of the dye film according to the present invention means the thickness of the grooves and the lands altogether, in other words, the average thickness at the grooves and the lands. The value may be easily converted from Absorption and the absorption coefficient.

FIG. 6 shows the layer composition on the first substrate on which the guide grooves have been formed. Here, the reference numbers in FIGs. 6 and 7 denote the same reference numbers in FIG. 2. In this aspect, the recording mark 9 formed on the first recording layer is preferably formed at the groove 10 of the first substrate.

On the other hand, FIG. 7 shows the layer composition over the second substrate on which guide grooves have already been formed. The recording mark 9, which is formed in the second recording layer, is preferably formed at the land 11 of the second substrate.

More preferable composition is to make the second reflective layer five times as thick as the first reflective layer. A thick dye film results in poor heat conduction, and the recording mark does not spread easily. When the film thickness of the second recording layer is 1.5 to 2.5 times as large as that of the first recording layer, for example, recording marks in the second recording layer do not spread easily compared to those on the first recording layer. Therefore, by making the second reflective layer in contact with the second recording layer thicker than the first reflective layer, the spread property of the recording marks in the first and the second recording layers may be suppressed. Here, there is no upper limit to the ratio, but the reflection intensity becomes saturated when the thickness is above a certain level. Therefore, an appropriate ratio may be selected such that it is above five times and the loss in manufacturing is minimal.

Furthermore, an identical effect may be obtained by making the thermal conductivity of the second reflective layer higher than that of the first reflective layer, i.e., by employing a material with higher thermal conductivity for the second reflective layer than for the first second layer.

Also, as shown in FIGs 6 and 7, the shapes of the grooves formed in the first and the second substrates are not identical. In the case of 4.7-GB and 0.74 μm-pitch DVD+R and a DVD-R, it is preferable that the groove shape of the first substrate when a groove depth is 1,000 Å to 2,000 Å and a groove width (base width) is 0.2 μm to 0.3 μm. As shown in FIG. 6, because there is a tendency that a dye fills the grooves when the film is deposited by spin-coating method and the shape of the interface between the dye recording layer and the reflective layer is determined by the amount filled and the groove shape in the substrate, the above-mentioned range is suitable for utilizing the interfacial reflection.

On the other hand, the grooves of the second substrate, as mentioned above, need to be 200 Å to 600 Å, and the groove width is preferably 0.2 μm to 0.4 μm. As shown in FIG. 7, the shape of the interface between the dye recording layer and the reflective layer is determined by the groove shape of the substrates, and the above-noted range is appropriate for utilizing the interfacial reflection. For the first and second substrates, the depth of grooves greater than the above range of the groove shape tends to decrease the reflectivity. When the groove depth is less than the above range or the groove width is beyond the above groove shape range, the shape of the recording marks formed becomes irregular, resulting in increased jitter.

Preferably, the film thickness of a dye layer is 400 Å to 1,000 Å for the first recording layer (groove portion) and 600 Å to 2,500 Å for the second recording layer (land portion). When the film thickness of the dye layer is in this range, a signal modulation (contrast) may not be easily obtained. To the contrary, when they are thicker, the shapes of the recording marks become irregular, resulting in increased jitter.

The following explains in detail another preferable aspect of the optical recording medium according to the present invention, wherein the depth of the guide grooves formed in the second substrate is 1,900 Å to 2,700 Å, and the depth of the guide grooves formed in the first substrate is 1,300 Å to 1,700 Å.

Regarding the optical recording medium of this aspect, the depth of the guide grooves is around 1,300 Å to 1,700 Å for the first recording layer. The shape of the interface between the first recording layer and the first reflective layer is determined by the shape of the guide grooves in the first substrate and the filled amount of the dye since there is a tendency that the dye (the recording layer) fills the grooves when the film is deposited with spin-coating method. The depth of the guide grooves in the first recording layer less than 1,300 Å results in deteriorated jitter in recording, and the depth greater than 1,700 Å decreases the reflectivity.

FIGs. 8 and 9 show the relations of the reflectivity and jitter with the depth of the guide grooves in the first substrate, measured with the same medium and optical system used to obtain the measured data in FIG. 4. FIG. 8 shows that the upper limit of the groove depth is approximately 1,700 Å because the reflectivity decreases as the groove depth increases. Also, FIG. 9 shows that the lower limit of the groove depth is 1,300 Å because the jitter increases as the groove depth decreases. Meanwhile, the similar tendency is shown even with different wavelengths, materials and thickness of each layer, as long as the LD wavelength is within the range of 640 nm to 665 nm, which is used generally for DVDs.

Absorption in the first recording layer at the maximum absorption wavelength λmax is preferably in the range of 0.5 to 0.8. With Absorption less than 0.5, it is difficult to obtain sufficient modulation. The absorbance exceeding 1.4

is not preferable because the jitter deteriorates due to the heat accumulation in recording.

In this aspect, as indicated by the recording portion 12 by arrows in FIG. 3, the composition is preferably such that the recording is performed where the thick portion of the dye film formed at the concave portion of any of the first and the second recording layers. This is because a sufficient modulation may not be easily obtained at a thin portion of the dye layer formed on the convex portion of the substrates.

Regarding the recording method to the optical recording medium of the present invention, the mark length modulation recording, which is identical to the conventional DVD+R and DVD-R, may be employed. Preferably, the recording strategy to form a mark, i.e., the light emission pulse of the recording laser, is varied from the second recording layer to the first recording layer. This is because, as mentioned above, the spread property of the marks is different in each of the recording layers. Specifically, the recording laser light emission pulse time for forming signal marks of an identical length preferably has the following relation:

$$Ws2>Ws1$$

where

Ws2 is the recording laser emission pulse time for forming a signal with the shortest mark length in the second recording layer, and

Ws1 is the recording laser emission pulse time for forming a signal with the shortest mark length in the first recording layer.

In addition, a DVD+R employs a so-called multipulse recording strategy, wherein a single signal mark is recorded by applying a laser beam with multiple number of light-emission pulse, for a particularly long signal marks such as 14T. This method is also preferably employed in the present invention. When a multipulse recording is performed, it is preferable to make the width of the multipulse width for recording in the second recording layer shorter than that for recording in the first recording layer.

Furthermore, recording beforehand the information regarding these recording conditions on the guide grooves eases the configuration of the recording condition in a drive. In other words, in recording on the medium in a drive, by reading the recording conditions information and configuring the recording conditions, recording without errors caused by the difference in the recording conditions is possible.

<Configuration>

The material used for the optical recording medium of the present invention is described below in detail.

The optical recording medium of the present invention has a configuration such that a high reflectivity is achieved by multiple interference effect of both interfaces of the recording layers, similar to DVD+R and CD-R. It is necessary for recording layers to have such optical characteristics that the refractive index n is large at a recording/reproducing wavelength and that the absorption coefficient k is relatively small. Preferable ranges are as follows: n is greater than two; k is greater than 0.03 and less than 0.2. Such optical characteristics may be obtained by utilizing the properties of the long-wave end on the light absorption band of the dye film.

FIG. 10 shows a light absorption spectrum in a dye recording layer. In FIG. 10, c denotes the maximum light absorption wavelength, and d denotes a recording/reproducing wavelength.

Examples of the material that may be used for the first and the second recording layers include a cyanine dye, a phthalocyanine dye, a pyrylium and thiopyrylium dye, an azulenium dye, a squarylium dye, an azo dye, a formazan chelate dye, a metal (such as Ni and Cr) complex salt dye, a naphtoquinone and anthraquinone dye, an indophenol dye, an indoaniline dye, a triphenylmethane dye, a triallylmethane dye, an aminium and diimmonium dye and a nitroso compound.

Among them, at least one type of dye is preferably selected from a tetraazaporphyrazine dye, a cyanine dye, an azo dye or a squarylium dye for the following advantages: the maximum absorption wavelength in the light absorption spectrum of the film lies within the range of 580 nm and 620 nm, and the desired optical properties may be easily achieved with the laser wavelength for DVDs of approximately 650 nm.

Here, an organic dye as a main composition means that a sufficient amount of dye is used to secure the preferable recording/reproducing properties. In general, however, it means a recording layer that comprises only a dye besides additives such as a binder and a stabilizer added if necessary.

The substrate materials used in the present invention may be selected at discretion from various materials used for the substrates of traditional optical recording media.

Examples of the material for the substrate include an acrylic resin such as a polymethylmethacrylate; vinyl chloride resin such as a polyvinyl chloride and a polyvinyl chloride copolymer; an epoxy resin, a polycarbonate resin, an amorphous polyolefin resin; polyester resin; a glass such as soda-lime glass; and a ceramic. Among them, a polymethylmethacrylate resin, a polycarbonate resin, an epoxy resin, a polyester resin and a glass are preferable for their dimensional stability, transparency and planarity, and a polycarbonate resin is the most preferable for its ease in forming.

Regarding a material used for the first and the second reflective layers, a material having a high reflectivity to a laser beam is used. Examples of the material include a metal and a semi-metal such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ca, In, Si, Ge, Te, Pb, Po, Sn, and SiC. Among them, in terms of higher reflectivity, Au, Ag and Al are preferred. These materials may be used individually or in combination, or as an alloy thereof Also, a silver alloy is preferable considering its reflectivity, reliability and price, with specific examples being AgCu, AgNdCu, AgPdCu and AgAuCu. The content of the silver in a silver alloy is at least 90 % by mass, preferably 95 % by mass.

It is preferable that the first reflective layer has a thickness of 50 Å to 1,000 Å and that the second reflective layer has a thickness of 1,000 Å to 5,000 Å. In the cases where the first and the second reflective layers comprise an identical material, the thickness of one layer is preferably different from the other as described above.

An incident light from the first substrate side is used to record and reproduce on the second recording layer. Therefore, the first reflective layer should be a translucent film, and the light transmittance of the reflective layer is preferably 40 % to 80 % in terms of the sensitivity and the reflectivity of the first recording layer and the second recording layer. With the light transmittance of less than 40 %, sufficient intensity of the recording/reproducing light may not be obtained on the second recording layer. On the other hand, when it is greater than 80 %, sufficient reflectivity may not be obtained on the first reflective layer.

In addition, a protective layer may be provided for chemical and physical protection of the reflective layer. A UV-cure resin may be employed as a material for the protective layer.

An inorganic protective layer is provided between the second recording layer and the transparent intermediate layer, for chemical and physical protection of the second recording layer

Examples of the material used for the inorganic protective layer include inorganic materials with high light transmittance such as SiO, $SiO_2$ $MgF_2$, $SnO_2$, ZnS, ZnS-$SiO_2$ and $Al_2O_3$. ZnS-$SiO_2$ is most preferable in terms of its low crystallinity and high refractive index. In addition, materials with a refractive index of 1.0 to 2.4 at a recording/reproducing wavelength are preferable, with examples being ZnS-$SiO_2$, $Al_2O_3$ and $SiO_2$. More preferable refractive index is 1.2 to 2.2. A refractive index of 2.2 and less is preferable because the fluctuation in the reflectivity caused by the film thickness fluctuation in the inorganic protective layer is small and stable. When the refractive index is greater than 2.4, the protective layer is unstable since the reflectivity varies largely depending on the fluctuation in the film thickness of the inorganic protective layer. Also, with small refractive index, the film thickness of the inorganic protective layer should be increased in order to obtain a predefined reflectivity. When the refractive index is less than 1.0, the film thickness is too large, which may be a disadvantage in terms of manufacturing cost.

A transparent intermediate layer in which the thickness of a protective layer is 100 Å to 2,000 μm preferably serves also as an adhesive layer, and an acrylate-, epoxy- or urethane-based UV-cure or thermosetting adhesive and a hot-melt adhesive may be used. In addition, the two layers may be laminated with a transparent sheet.

Next, the manufacturing method of the optical recording medium according to the present invention is described in detail, but this is not to be construed as limiting the present invention.

A first recording layer is formed by film coating method on a first substrate on whose surface grooves and/or pits have already been formed. A reflective layer is formed over it by vapor deposition method to manufacture a first information substrate. Next, a reflective layer is formed by vapor deposition method on a first substrate on whose surface grooves and/or pits have already been formed. A second recording layer is formed over it by film coating method followed by an inorganic protective layer formation by a vapor deposition method to manufacture a second information substrate. Then, an optical recording medium is easily manufactured by laminating the first and the second information substrates through a transparent intermediate layer comprising an adhesive.

In other words, the above manufacturing method is comprised of the following processes (i) to (vi).

<Manufacturing of First Information Substrate>

(i) A process of forming a first recording layer comprising a dye as a main component by film coating method on a first substrate on whose surface grooves and/or pits have already been formed.
(ii) A process of forming a reflective layer over the first recording layer by vapor deposition method.

<Manufacturing of Second Information Substrate>

(iii) A process of forming a reflective layer by vapor deposition method on a first substrate on whose surface grooves and/or pits have already been formed.
(iv) A process of forming a second recording layer comprising a dye as a main component over the reflective layer by film coating method.
(v) A process of forming an inorganic protective layer on top of the second recording layer by vapor deposition method.

<Laminating Process>

(vi) A process of laminating the first information substrate and the second information substrate through an adhesive layer.

<Recording Layer Formation Process>

The film deposition method is not restricted according to the present invention. A spin-coating method, a cast-coating method, a roller-coating method, a pulling method, a vapor deposition method and a sputtering method may be used; however, in general, a recording layer comprising a dye compound as a main component is formed by film coating method. That is, a recording layer is formed by applying a coating liquid in which an organic dye compound is dissolved in a solvent to the substrate surface. Any heretofore known organic solvent such as an alcohol, a cellosolve, a halocarbon, a ketone and ether may be used as the solvent to prepare the coating liquid. Also, regarding the coating method, since the film thickness may be controlled by adjusting the density and the viscosity of the optical absorbing layer, the drying temperature of the solvent, the rotating speed of a spin-coater and a time of rotation, a spin-coating method is preferable.

<Reflecting Layer Formation Process>

According to the present invention, a reflective layer is usually formed by vapor deposition method. That is, a reflective layer is formed by depositing, sputtering or ion-plating, for example, an optical reflective material. Among them, a sputtering method is preferable for its uniformity and tact time.

<Inorganic Protective Layer Formation Process>

According to the present invention, an inorganic protective layer is usually formed over the second recording layer by vapor deposition method. That is, an inorganic protective layer is formed by depositing, sputtering or ion-plating, for example, an inorganic protective layer material. Among them, an sputtering method is preferable for its uniformity and tact time.

<Laminating Process>

According to the present invention, the first and the second information substrates are laminated through an adhesive layer. That is, an adhesive is delivered by drops on the surface of the inorganic protective layer. After the first information layer is superimposed as well as the adhesive is spread uniformly, the adhesive is hardened by ultraviolet irradiation.

The recording method of the optical recording medium according to the present invention is not restricted other than to apply a red laser beam on the first substrate of the optical recording medium according to any one of the DVD+RW, DVD+R, DVD-R, DVD-RW and DVD-RAM recording/reproducing methods to record and reproduce on the first recording layer and the second reproducing layer. Accordingly, a recording method of a double-layer optical recording medium may be produced, wherein a preferable single-sided recording/reproducing is possible with a red laser beam.

In addition, the optical recording apparatus of the present invention comprises a rotating driving mechanism that rotates an optical recording medium, a laser oscillator that emits a laser beam, a lens that collects the laser beam emitted from the laser oscillator and focuses it to the recording surface of the optical information recording medium and an optical pickup comprising a photo-detector detecting the light reflected by the optical information recording medium, wherein recording/reproducing is performed by applying a red laser beam on the first substrate according to any one of the DVD+RW, DVD+R, DVD-R, DVD-RW and DVD RAM recording/reproducing methods. The optical recording medium of the present invention is not restricted other than that any one of the first recording layer and the second recording layer is accessed from the identical surface side of the optical recording medium. Therefore, an optical information recording apparatus for a double-layer optical recording medium is provided, wherein a preferable single-sided recording/reproducing is possible with a red laser beam.

Hereinafter, the present invention will be illustrated in more detail with reference to examples given below, but these are not to be construed as limiting the present invention.

<Example A-1>

On a polycarbonate substrate (a first substrate) made of having a diameter of 120 mm and a thickness of 0.58 mm, which has a convexo-concave pattern of guide grooves having a depth of 1,500 Å, a width of 0.25 μm and a track pitch of 0.74 μm, a first recording layer having a thickness of 600 Å was formed by spin-coating a coating liquid in which a squarylium dye compound, represented by Formula (1) below, is dissolved in 2,2,3,3- tetrafluoropropanol.

The light absorption spectrum of the first recording layer is shown in FIG. 11; the maximum absorption wavelength was 607 nm, and the absorbance (Abs) at the maximum absorption wavelength was 0.9.

Next, a first information substrate was prepared by forming a second reflective layer having a thickness of 200 Å by sputtering method with Ar as a sputtering gas over the first recording layer.

On another polycarbonate substrate (a second substrate) made of polycarbonate having a diameter of 120 mm and a thickness of 0.58 mm, which has a convexo-concave pattern of guide grooves having a depth of 200 Å, a width of 0.25 μm and a track pitch of 0.74 μm, a second reflective layer having a thickness of approximately 1,200 Å was formed by sputtering method with Ar as a sputtering gas.

Next, on the reflective layer, a squarylium dye compound, represented by Formula (1) below, was applied by spin-coating method, wherein the film thickness was adjusted so that the absorbance was 1.6 (the maximum absorption wavelength was 609 nm). In addition, over this film, an inorganic protective layer of $ZnS\text{-}SiO_2$ having a thickness of approximately 1,500 Å was formed by sputtering method. Therefore, a second information substrate was prepared.

Then, the first information substrate and the second information substrate were laminated with a UV-cure adhesive (KARAYAD DVD 003 manufactured by Nippon Kayaku Co., Ltd.) to form an optical recording medium with a layer composition shown in FIG. 2 was prepared.

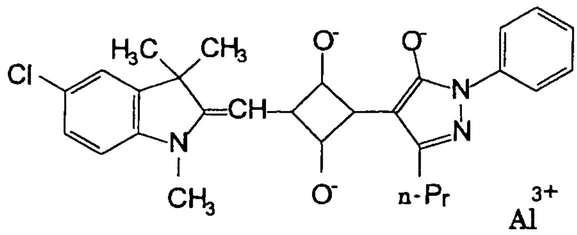

Formula (1)

A DVD (8-16) signal was recorded at a linear velocity of 9.2 m/sec with a DVD evaluation apparatus (DDU 1000, manufactured by PulseTech Products Corporation, with a wavelength of 657 nm and an NA of 0.65), and the reproduction of the optical recording medium was evaluated. The results obtained were satisfactory to DVD standards (Table 1).

Here, the recording strategy was a multipulse system of (n-2)T, and the multipulse width was set at 10/16.

Table 1

| Property | DVD standards | First Recording Layer | Second Recording Layer |
|---|---|---|---|
| Reflectivity after Recording (R14H) | 18 % or greater | 20 % | 26 % |
| Modulation (I14/I14H) | 60 % or greater | 84 % | 80 % |
| Jitter | 8 % or less | 7.0 % | 7.5 % |

<Example A-2>

An optical recording medium of the present invention was prepared in the same manner as Example A-1, except that the dye was changed to a squarylium compound represented by Formula (2) below, and it was evaluated

in the same manner as Example A-1. Preferable results similar to Example A-1 were obtained (Table 2).

The light absorption spectrum of this optical recording medium is shown in FIG. 12; the maximum absorption wavelength was 607 nm.

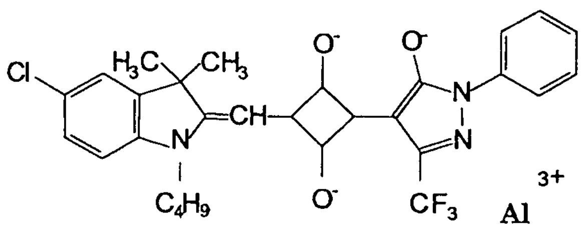

Formula (2)

Table 2

| Property | DVD standards | First Recording Layer | Second Recording Layer |
|---|---|---|---|
| Reflectivity after Recording (R14H) | 18 % or greater | 18 % | 28 % |
| Modulation (I14/I14H) | 60 % or greater | 80 % | 80 % |

<Example A-3>

An optical recording medium of the present invention was prepared in the same manner as Example A-1, except that the film thickness of the second recording layer was changed so that the absorbance (Abs) of the second recording layer was 1.4 to 2.1, and it was evaluated in the same manner as Example A-1. Preferable modulation of 60 % or greater at an absorbance of 1.5 or greater was obtained, as shown in FIG. 13,

<Example A-4>

An optical recording medium of the present invention was prepared in the same manner as Example A-1, except that the groove depth of the second substrate was changed to 600 Å. The reflectivity of the second recording layer was evaluated in the same manner as Example A-1, and the result was 18 %.

<Example A-5>

An optical recording medium of the present invention was prepared in the same manner as Example A-1, except that the groove depth of the second substrate was changed to 200 Å. The jitter of the second recording layer was evaluated in the same manner as Example A-1, and the result was 8 %.

<Comparative Example A-1>

An optical recording medium of the present invention was prepared in the same manner as Example A-1, except that the dye was changed to the squarylium dye compound represented in Formula (2) and the groove depth of the second substrate was changed to 800 Å. The reflectivity of the second recording layer was evaluated in the same manner as Example A-1, and the result was 15 %.

According to the present invention, an optical recording medium, with which a recording/reproducing of the first and the second recording layers is possible from a single side, may be provided.

According to the preferable aspect of the present invention, wherein the film thickness of the recording layers and the reflective layers and the heat conductivity of the reflective layers were adjusted, an optical recording medium, with which a recording with the same recording strategy pattern is possible on the first recording layer and the second recording layer, may be provided.

<Example B-1>

A disk-shaped substrate made of a polycarbonate resin having a diameter of 12 cm and a thickness of 0.58 mm, with guide grooves having a depth of 1,600 Å and a track pitch of 0.74 μm, was formed as a first substrate by injection molding method.

Then, a first recording layer was formed over the first substrate by applying, according to spin-coating method, a coating liquid in which 0.07 g of a squarylium dye compound represented by Formula (3) below and 0.03 g of a formazan compound represented by Formula (4) below were dissolved in 10 g of 2,2,3,3- tetrafluoropropanol.

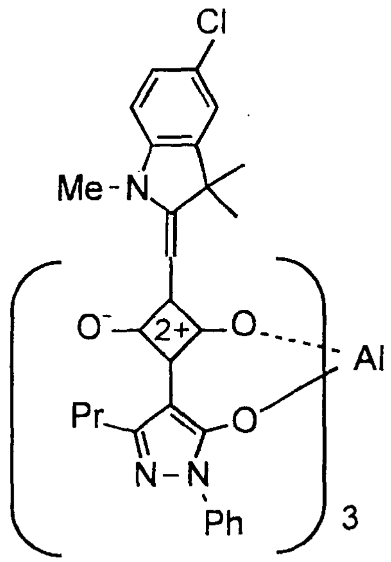

Formula 3

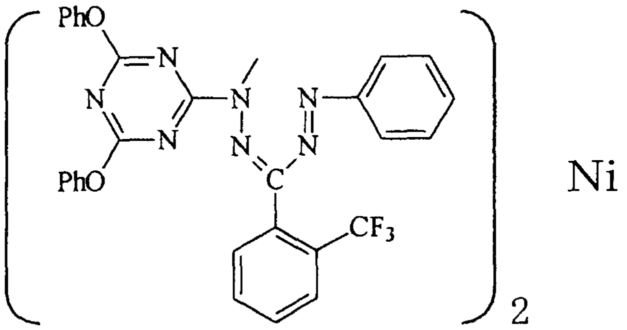

Formula 4

The absorbance of the first recording layer at a wavelength of 600 nm was measured with a spectrophotometer U-1000 (manufactured by Hitachi, Ltd.), and it was found to be 0.6.

Subsequently, after a fifteen-minute annealing in an oven at 100 °C, a first reflective layer was formed over the first recording layer with a AgNdCu alloy target (produced by Kobelco Research Institute, Inc.), which had a Ag, Nd and Cu contents of 99.0 %, 0.4 % and 0.6%, respectively on a mass basis, in a sputtering apparatus (manufactured by Unaxis Data Storage) at a condition where a sputtering power of 1.1 kW and a sputtering time of 0.7 seconds. The film thickness of the first reflective layer was measured by a thin-film inspection apparatus ETA (manufactured by Steag

Inc.), and it was found to be 150 Å. The light transmittance of the first reflective layer at a wavelength of 657 nm, measured with the same spectrophotometer U-1000 as above, was 52 %.

On the other hand, a disk-shaped substrate made of a polycarbonate resin having a diameter of 12 cm and a thickness of 0.58 mm, with guide grooves having a depth of 2,100 Å and a track pitch of 0.74 μm, was formed as a second substrate by injection molding method.

Then, a second reflective layer was formed over the second substrate with a AgNdCu alloy target (produced by Kobelco Research Institute, Inc.), which had the Ag, Nd and Cu mass contents of 99.0 %, 0.4 % and 0.6%, respectively, in a sputtering apparatus (manufactured by Unaxis Data Storage) at a condition where a sputtering power of 1.1 kW and a sputtering time of 0.7 seconds.

Subsequently, a second recording layer was formed over the second recording layer by applying, according to spin-coating method, a coating liquid in which 0.10 g of a squarylium dye compound represented by Formula (3) above and 0.30 g of a formazan compound represented by Formula (4) above were dissolved in 10 g of 2,2,3,3-tetrafluoropropanol.

The absorbance of the first recording layer at a wavelength of 600 nm was measured by reflection method with a spectrophotometer U-1000 (manufactured by Hitachi, Ltd.), and it was found to be 1.2.

Then, an inorganic protective layer with a refractive index of 2.0 was formed with a ZnS-$SiO_2$ target (the molar ratio of ZnS to $SiO_2$ was 80 to 20, and it was manufactured by Japan Energy Corporation) in a sputtering apparatus Big Sprinter (manufactured by Unaxis Data Storage). The film thickness of the inorganic protective layer, measured with an optical spectrometric scanner, was 1,800 Å.

The two substrates prepared above were laminated with a spin-coating bonding machine such that the sides with guide grooves faced each other to form a double-layer optical recording medium. A UV-cure resin DVD-003 (manufactured by Nippon Kayaku Co., Ltd.) was used as an adhesive, and an ultraviolet light was irradiated from the side of the first substrate for bonding.

Regarding the optical recording medium, with an optical disc evaluation apparatus, DDU-1000 (manufactured by PulseTech Products Corporation), a recording was proceeded on the second recording layer at a linear velocity of 9.2 m/s, and the modulation, reflectivity and jitter were measured. The jitter was measured with Time Interval Analyzer TA320 (manufactured by Yokogawa Electric Corporation). The results are shown in Table 3 below.

<Example B-2>

A double-layer optical recording medium was prepared in the same manner as Example B-1, except that the depth of the groove in the second substrate was changed to 2,300 Å, and the modulation, reflectivity and jitter were measured. The results are shown in Table 3 below.

<Example B-3>

A double-layer optical recording medium was prepared in the same manner as Example B-1, except that the depth of the groove in the second substrate was changed to 2,500 Å, and the modulation, reflectivity and jitter were measured. The results are shown in Table 3 below.

<Comparative Example B-1>

A double-layer optical recording medium was prepared in the same manner as Example B-1, except that the depth of the groove in the second substrate was changed to 1,800 Å, and the modulation, reflectivity the jitter were measured. The results are shown in Table 3 below.

<Comparative Example B-2>

A double-layer optical recording medium was prepared in the same manner as Example B-1, except that the depth of the groove in the second substrate was changed to 2,800 Å, and the modulation, reflectivity and jitter were measured. The results are shown in Table 3 below.

Table 3 indicates that preferable properties were obtained with Examples B-1 to B-3; however, Comparative Examples B-1 to B-2 show substantially inferior results with respect to all the properties compared to Examples.

Table 3

| | Groove Depth of Second Substrate (Å) | Modulation | Reflectivity (%) | Jitter σ/T(%) | Judgment |
|---|---|---|---|---|---|
| Example B-1 | 2,100 | 0.70 | 20 | 7.5 | OK |
| Example B-2 | 2,300 | 0.68 | 23 | 7.2 | OK |
| Example B-3 | 2,500 | 0.73 | 19 | 7.6 | OK |
| Comparative Example B-1 | 1,800 | 0.52 | 15 | 13 | NG |
| Comparative Example B-2 | 2,800 | 0.88 | 15 | 12 | NG |

According to the present invention, a double-layer optical recording medium comprising preferable properties may be provided, wherein recording/reproducing is possible with a red laser beam. Also, an optical recording medium with small distribution of reflectivity in the second recording layer and the reflective layer may be provided despite film-thickness distribution, wherein the refractive index of the inorganic protective layer is 1.0 to 2.4. In addition, an optical recording medium with sufficient reflectivity may be provided, wherein the transmissivity of the first reflective layer is 40 % to 80%.

**Claims**

1. An optical recording medium comprising, layered in the order from the recording/reproducing light incident plane, a first substrate, a first recording layer comprising an organic dye as a main component, a first reflective layer, a bonding layer, an inorganic protective layer, a second recording layer comprising an organic dye as a main component, a second reflective layer and a second substrate, and permitting recording/reproducing by a red laser beam, wherein the optical recording medium is **characterized by** the depth of guide grooves formed in the second substrate which is in any one of the ranges from 200 Å to 600 Å and from 1,900 Å to 2,700 Å.

2. The optical recording medium according to claim 1, wherein the depth of the guide grooves on the second substrate is 200 Å to 600 Å, the maximum absorption wavelength of the light absorption spectrum in the second recording layer is 580 nm to 620 nm, and Absorption at the maximum absorption wavelength is 1.5 to 2.0.

3. The optical recording medium according to claim 2, wherein the depth of the guide grooves in the second substrate is 200 Å to 400 Å.

4. The optical recording medium according to claim 2, wherein the film thickness of the second recording layer is at least 1.5 times as large as that of the first recording layer.

5. The optical recording medium according to claim 4, wherein the film thickness of the second recording layer is 1.5 to 2.5 times as large as that of the first recording layer.

**6.** The optical recording medium according to claim 2, wherein the film thickness of the second reflective layer is at least five times as large as that of the first reflective layer.

**7.** The optical recording medium according to claim 2, wherein the thermal conductivity of the second reflective layer is higher than that of the first reflective layer.

**8.** The optical recording medium according to claim 2, wherein a recording mark, which is formed in the first recording layer on the first substrate, is formed at the groove portion created by the asperity of the guide grooves, and a recording mark, which is formed in the second recording layer on the second substrate, is formed at the land portion created by the asperity of the guide grooves.

**9.** The optical recording medium according to claim 1, wherein the depth of the guide grooves formed on the second substrate is 1,900 Å to 2,700 Å, and the depth of the guide grooves formed on the first substrate is 1,300 Å to 1,700 Å.

**10.** The optical recording medium according to claim 9, wherein, at the maximum absorption wavelength $\lambda max$, Absorption in the first recording layer is 0.5 to 0.8, and Absorption in the second recording layer is 0.8 to 1.4.

**11.** The optical recording medium according to claim 9, wherein, regarding any of the thick portion and the thin portion of the recording layer created by the asperity of the guide grooves, the recording/reproducing is possible at the thick portion in any one of the first recording layer formed on the first substrate and the second recording layer formed on the second substrate.

**12.** The optical recording medium according to claim 9, wherein the refractive index of the inorganic protective layer at a recording/reproducing wavelength is 1.0 to 2.4.

**13.** The optical recording medium according to claim 9, wherein the transmissivity of the first reflective layer to an incident recording/reproducing light is 40 % to 80 %.

**14.** The optical recording medium according to claim 9, wherein the material for the reflective layer is a silver alloy.

**15.** An optical recording method of an optical recording medium,
wherein, an optical recording medium, comprising, layered in the order from the recording/reproducing light incident plane, a first substrate, a first recording layer comprising an organic dye as a main component, a first reflective layer, a bonding layer, an inorganic protective layer, a second recording layer comprising an organic dye as a main component, a second reflective layer and a second substrate, and permitting recording/reproducing by a red laser beam, is **characterized by** the depth of guide grooves formed in the second substrate which is in any one of the ranges from 200 Å to 600 Å and from 1,900 Å to 2,700 Å, and
a recording/reproducing is performed in the first recording layer and the second recording layer of the optical recording medium by applying a red laser beam on the first substrate according to any one of the DVD+RW, DVD+R, DVD-R, DVD-RW and DVD RAM recording/reproducing methods.

**16.** An optical recording apparatus comprising a rotating driving mechanism that rotates an optical information recording medium,
a laser oscillator that emits a laser beam, a lens that collects the laser beam emitted from the laser oscillator and focuses it to the recording surface of the optical information recording medium and an optical pickup comprising a photo-detector detecting the light reflected by the optical information recording medium and permitting recording/reproducing by applying a red laser beam on the first substrate according to any one of the DVD+RW, DVD+R, DVD-R, DVD-RW and DVD RAM recording/reproducing methods,
wherein the optical recording medium, comprising, layered in the order from the recording/reproducing light incident plane, a first substrate, a first recording layer comprising an organic dye as a main component, a first reflective layer, a bonding layer, an inorganic protective layer, a second recording layer comprising an organic dye as a main component, a second reflective layer and a second substrate, and permitting recording/reproducing by a red laser beam, has guide grooves formed in the second substrate with the depth of any one of the ranges from 200 Å to 600 Å and from 1,900 Å to 2,700 Å, and the optical recording apparatus is **characterized by** its accessing the first recording layer and the second recording layer from an identical surface of the optical recording medium.

FIG. 1

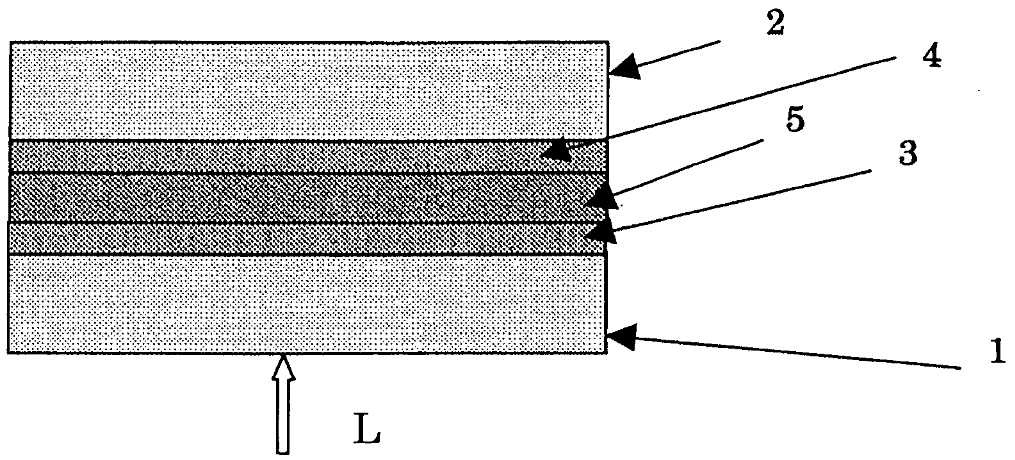


FIG. 2

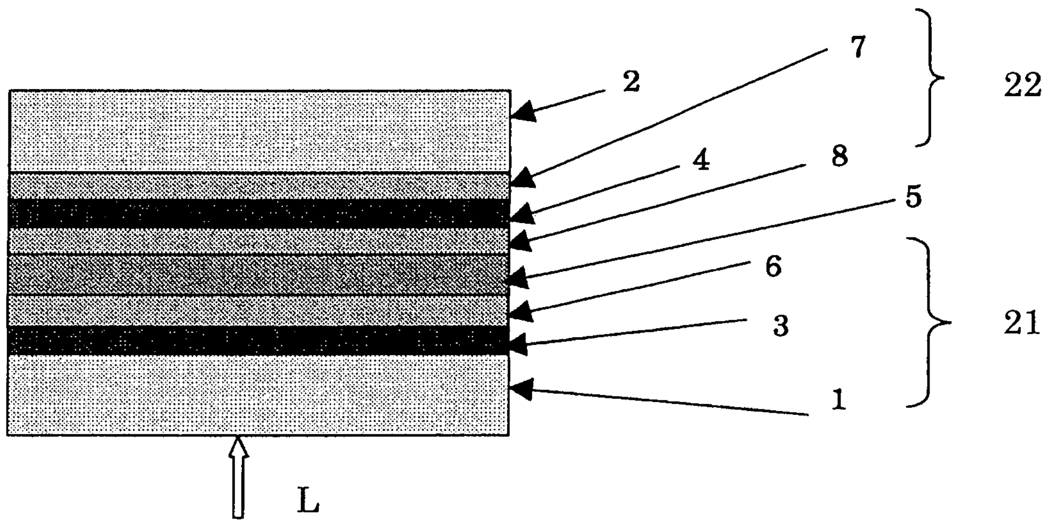

FIG. 3

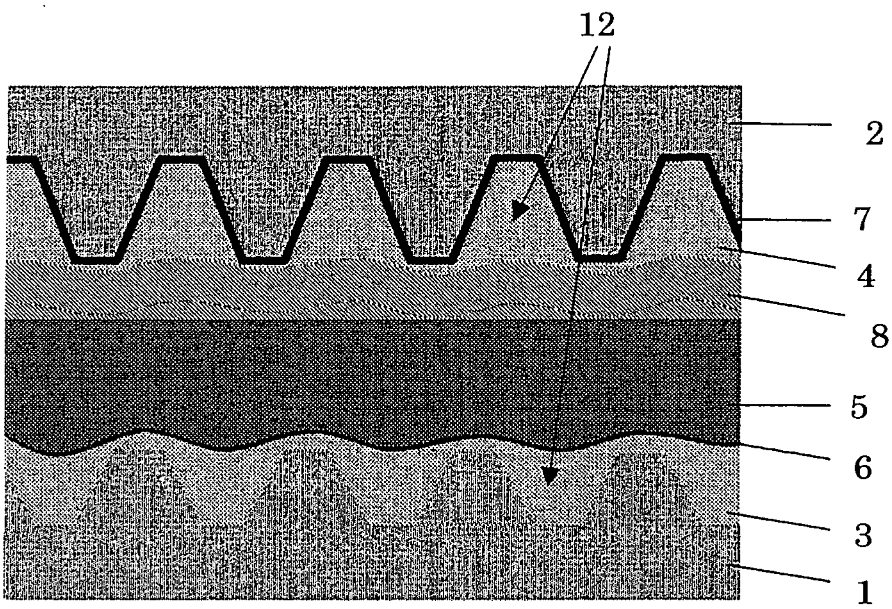
12
2
7
4
8
5
6
3
1

FIG. 4

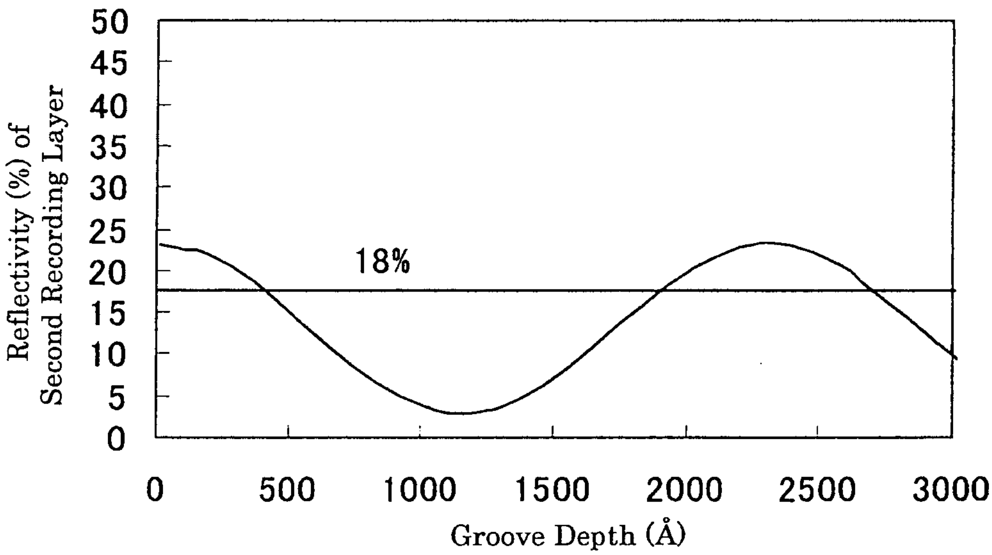
Reflectivity (%) of Second Recording Layer
50
45
40
35
30
25
20
15
10
5
0
18%
0
500
1000
1500
2000
2500
3000
Groove Depth (Å)

FIG. 5

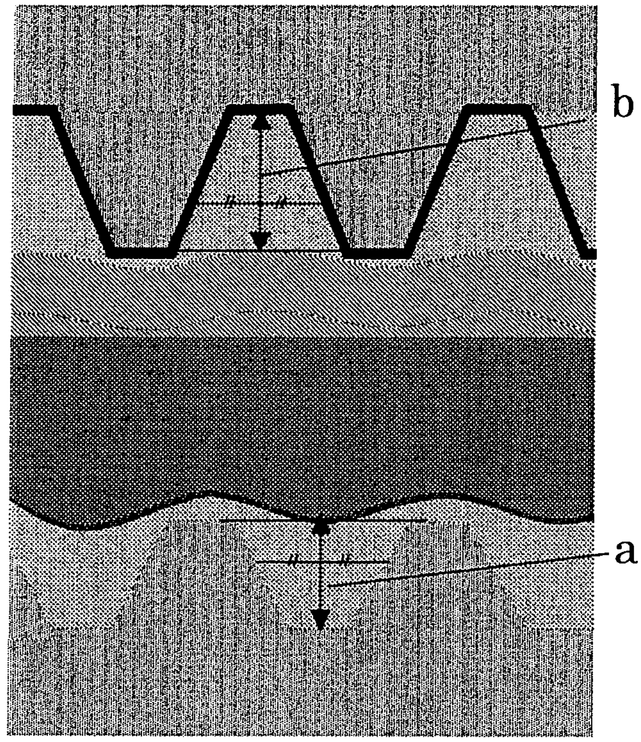


FIG. 6

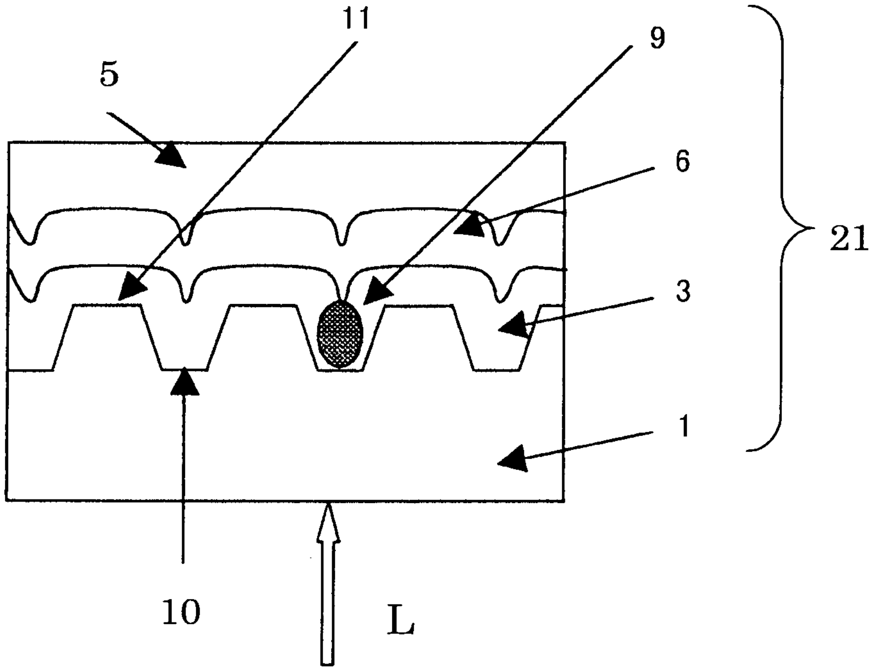

FIG. 7

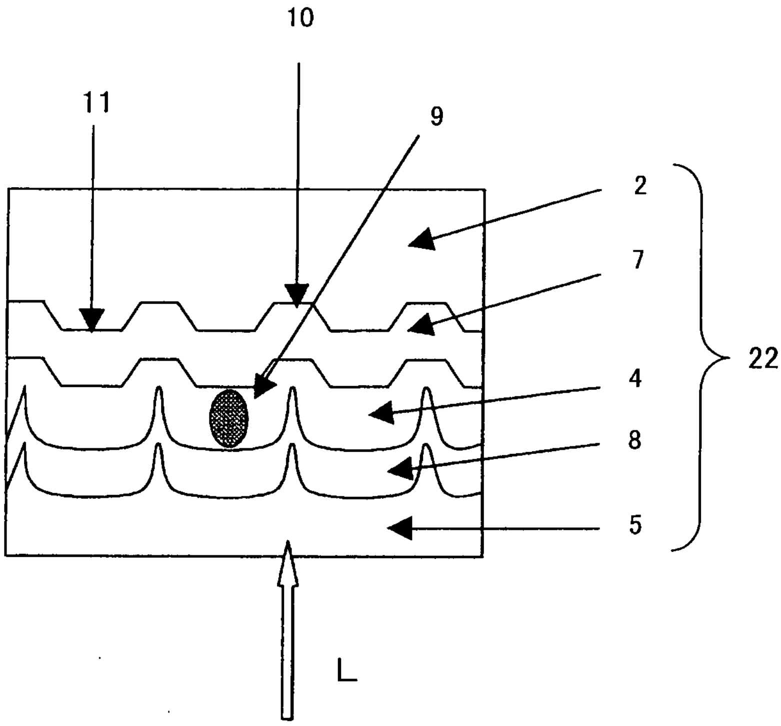
10
11
9
2
7
22
4
8
5
L

FIG. 8

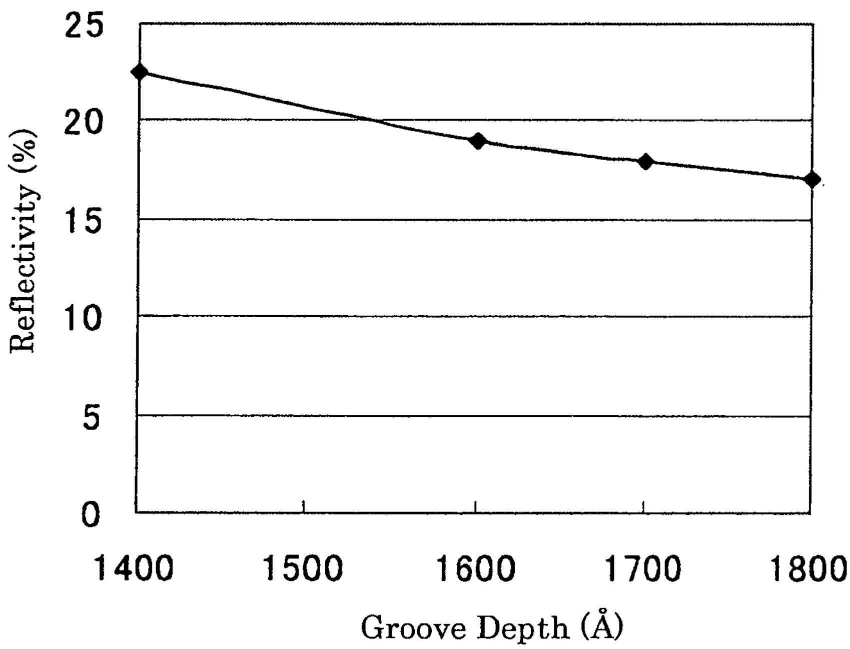
25
20
15
10
5
0
Reflectivity (%)
1400
1500
1600
1700
1800
Groove Depth (Å)

FIG. 9

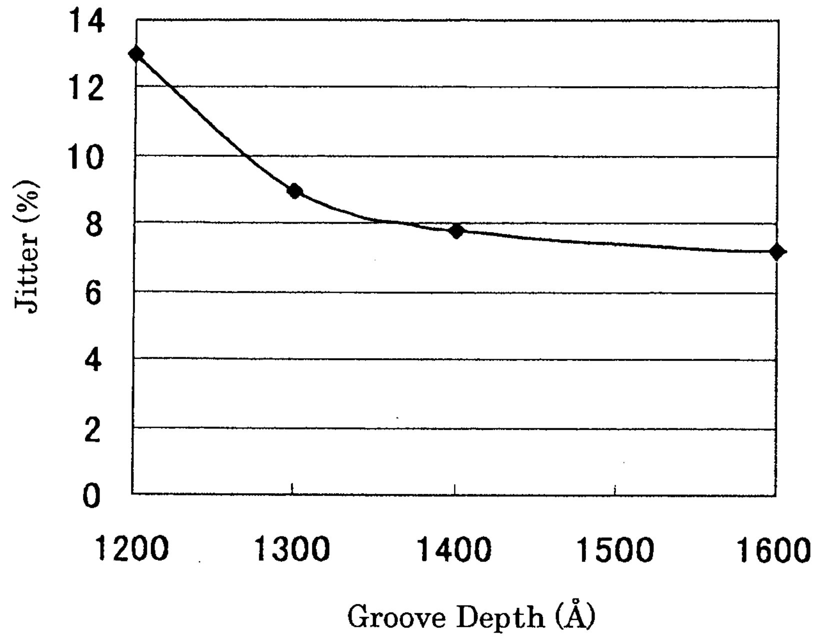

14
12
10
8
6
4
2
0
Jitter (%)
1200
1300
1400
1500
1600
Groove Depth (Å)


FIG. 10

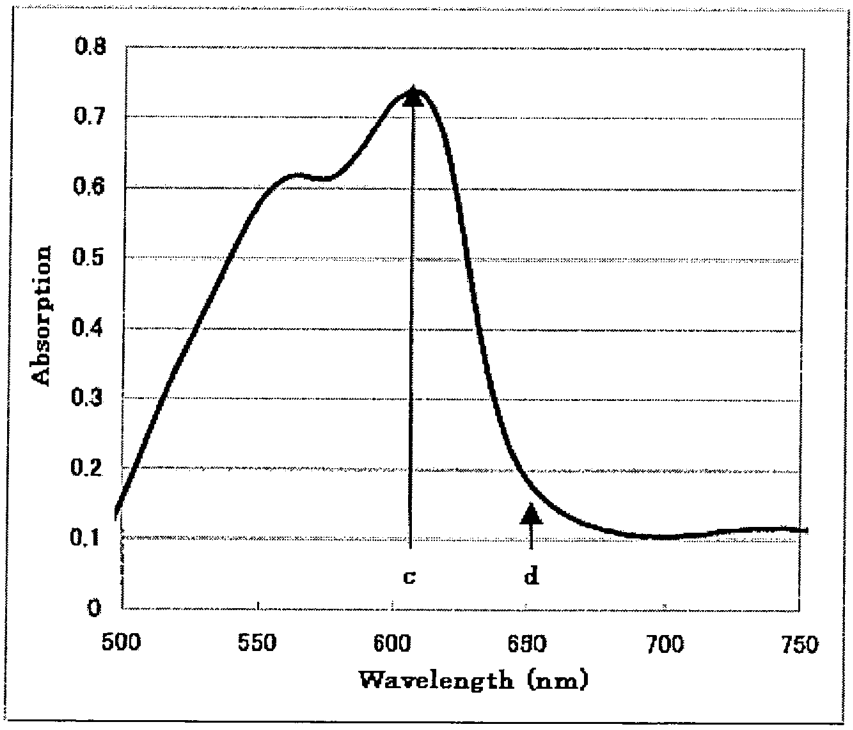

0.8
0.7
0.6
0.5
0.4
0.3
0.2
0.1
0
Absorption
c
d
500
550
600
650
700
750
Wavelength (nm)

FIG. 11

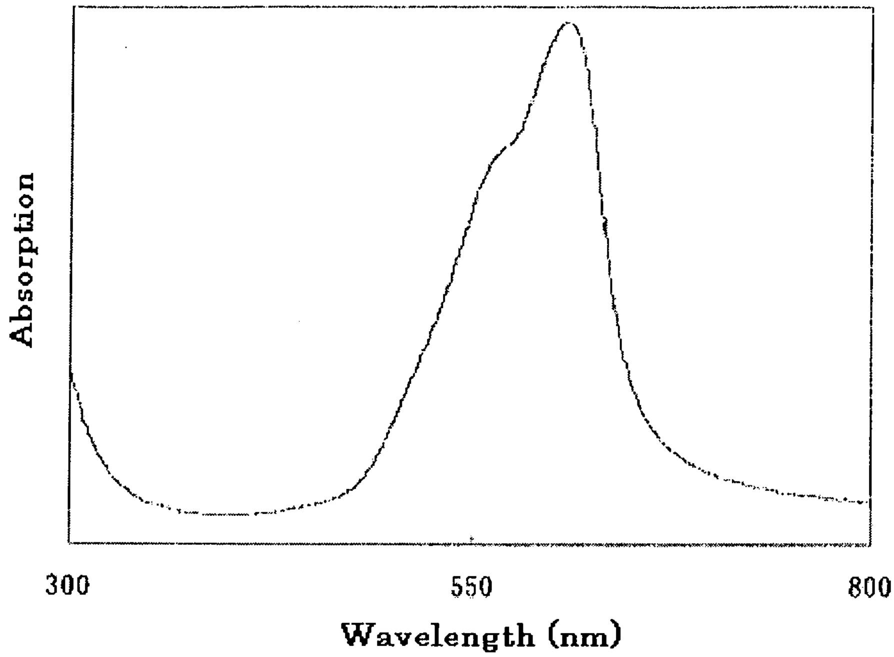
Absorption
300
550
800
Wavelength (nm)

FIG. 12

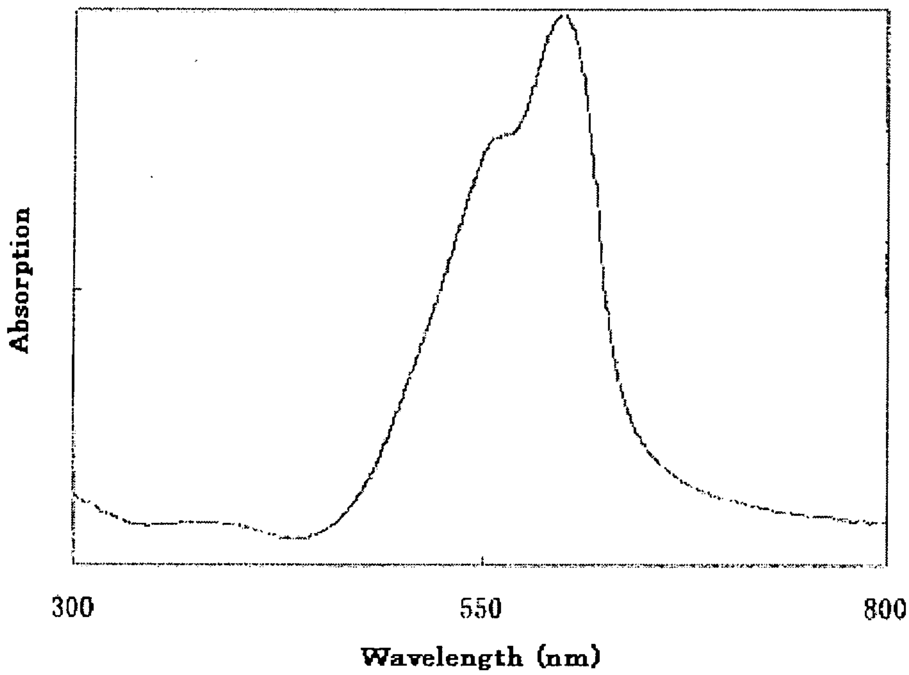
Absorption
300
550
800
Wavelength (nm)

FIG. 13

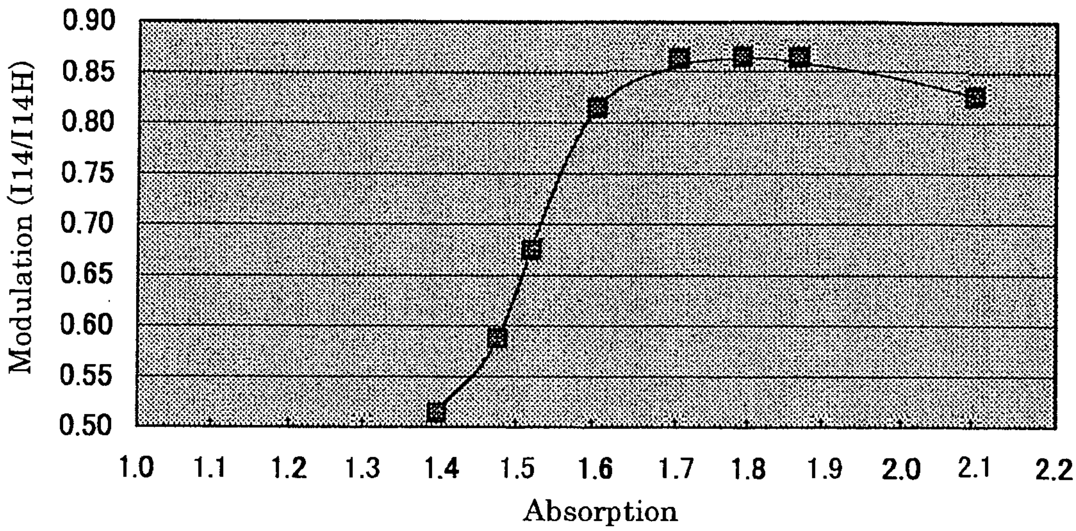
0.90
0.85
0.80
0.75
0.70
0.65
0.60
0.55
0.50
Modulation (I14/I14H)
1.0
1.1
1.2
1.3
1.4
1.5
1.6
1.7
1.8
1.9
2.0
2.1
2.2
Absorption

**INTERNATIONAL SEARCH REPORT**

International application No.
PCT/JP2004/006830

**A. CLASSIFICATION OF SUBJECT MATTER**
Int.Cl$^7$ G11B7/24

According to International Patent Classification (IPC) or to both national classification and IPC

**B. FIELDS SEARCHED**

Minimum documentation searched (classification system followed by classification symbols)
Int.Cl$^7$ G11B7/24

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1996-2004 |
| Kokai Jitsuyo Shinan Koho | 1971-2004 | Jitsuyo Shinan Toroku Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-23237 A (Pioneer Electronic Corp.), 26 January, 2001 (26.01.01), Full text; all drawings & EP 1067535 A | 1-16 |
| X | JP 11-66622 A (Taiyo Yuden Co., Ltd.), 09 March, 1999 (09.03.99), Full text; all drawings (Family: none) | 1-16 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 June, 2004 (23.06.04) | 13 July, 2004 (13.07.04) |
| Name and mailing address of the ISA/ Japanese Patent Office | Authorized officer |
| Facsimile No. | Telephone No. |

Form PCT/ISA/210 (second sheet) (January 2004)